# EUROPEAN PATENT SPECIFICATION

(11) **EP 1 553 652 B1**
(45) Date of publication and mention of the grant of the patent: **04.06.2014**
(21) Application number: 04016256.2
(22) Date of filing: 09.07.2004
(51) Int. Cl.: H01M 8/02, H01M 8/24

(54) **Sealing structure for sealing separator plates of fuel cell modules**
Dichtungsanordnung zum Abdichten von Separatorplatten eines Brennstoffzellenstapels
Structure d'étanchéité pour rendre étanche des plaques de séparateur de modules de piles à combustible

(30) Priority: 29.12.2003 CN 10121596
(43) Date of publication of application: 13.07.2005
(60) Divisional application: 10012866.9
(73) Proprietor: Asia Pacific Fuel Cell Technologies, Ltd., Chunan, Miaoli 350 (TW)
(72) Inventor: Ys Yang, Jefferson, CA 92869 (US)
(74) Representative: Goddar, Heinz J.

(56) References cited:
- US-A1- 2002 031 698
- US-A1- 2002 110 721
- US-A1- 2003 031 914

## Description

### BACKGROUND OF THE INVENTION

### 1. Field of the Invention

The present invention relates to a proton exchange membrane fuel cell, particularly to a sealing structure for sealing single fuel cell and stacked fuel cell module.

### 2. Description of the Prior Art

In the field of fuel cell technology, fuel cell is classified based on the electrolyte thereof. There are approximately five kinds of fuel cells which have been developed, namely, proton exchange membrane fuel cell or polymer electrolyte membrane fuel cell, abbreviated as PEMFC, alkaline fuel cell (AFC), phosphoric acid fuel cell (PAFC), molten carbonate fuel cell (MCFC) and solid oxide fuel cell (SOFC). Each kind of fuel cell has its own advantages, disadvantages and extent of applications. Among these known fuel cells, the PEMFC would be the most competitive power supply and has high practical value.

Principally, a fuel cell combines hydrogen and oxygen in an electrochemical reaction to produce water and release electrical energy, which can be basically considered a device that is the reverse of water electrolysis.

The performance of fuel cell mainly depends on the extent of the electrochemical reaction, which is affected by the materials forming the layers of the fuel cell and the seal between the plates. Hence, the selections of the materials and prevention of leakage between the layers will be the important factors of the performance of the fuel cell operations.

However, although much effort has been put to settle the aforesaid problems, the result is not satisfied. Generally speaking, there are two reasons adversely affecting the precise control: one is a failure to efficiently perform the leak and pollution proof functions between the anode and cathode bipolar plates, and the other is a failure to properly control the conductive compression pressure between each layer under an optimal status.

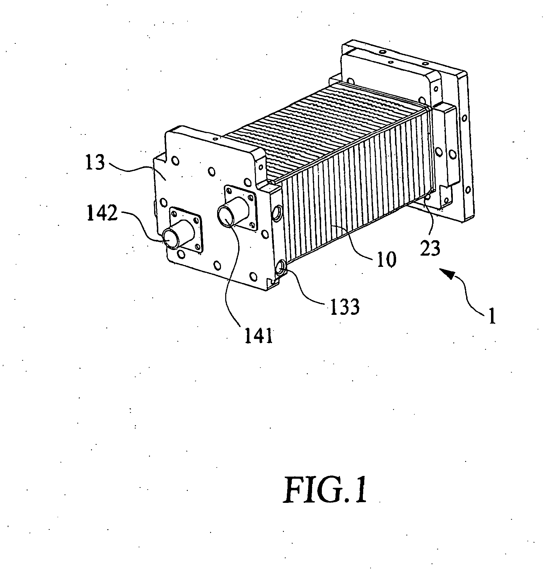

Please refer to **Fig. 1** which shows a cross-sectional view of the single cell of a prior art PEMFC. As shown, the single cell is constituted by an anode plate **101** and a cathode plate **102.** Basically, an anode gas diffusion layer **104** and a cathode gas diffusion layer **105** are separately provided on the two sides of a proton exchange membrane (PEM) **103,** forming a membrane electrode assembly (MEA). The MEA is mounted between the anode plate **101** and the cathode plate 10**2**.

The inner surface of the anode plate **101** facing the MEA is formed with a plurality of anode gas channels **101a**, and the inner surface of the cathode plate **102** facing the MEA is formed with a plurality of cathode gas channels **102a**. The anode plate **101** and cathode plate **102** are separately provided with gaskets **106**, **107** along edge portions thereof. Then, the MEA is disposed on a central portion of the anode plate **101** and cathode plate **102**, forming a gastight single cell.

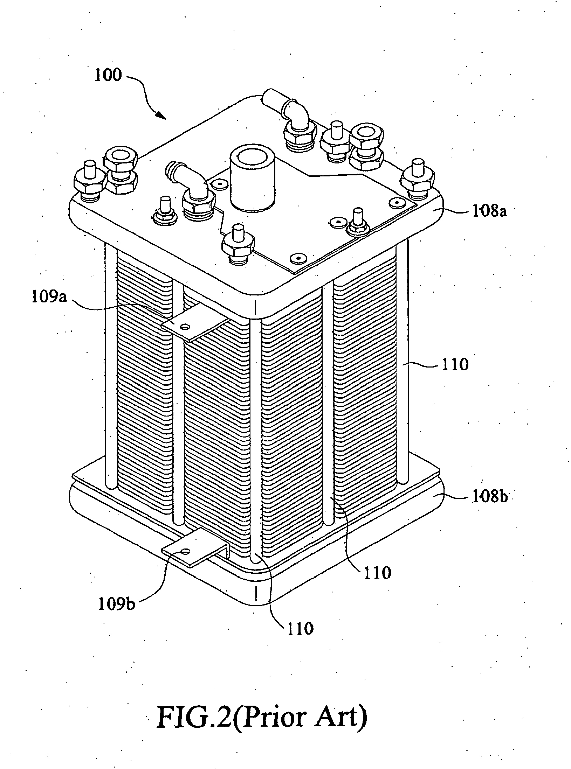

Practically, a plurality of such single cells are stacked to configure a fuel cell stack 100 as shown in **Fig. 2**. After the connections of plural manifolds or through holes adapted to supply gases and coolant and the dispositions of an upper end plate **108a** and a lower end plate **108b**, together with the conductive terminals **109a**, **109b**, the complete fuel cell stack 100 is able to perform the desired conductive reactions under a predetermined compression pressure by fastening a plurality of tie rods **110** therethrough.

However, this construction for the fuel cell will result in the following problems:

(1) The hydrogen supplied from the channels **101a** of the anode plate **101** tends to leak out due to the gaps between the gasket **106** and the anode plate **101**. Meanwhile, the oxygen or air supplied from the channels **102a** of the cathode plate **102** also tends to leak out due to the gaps between the gasket **107** and the cathode plate **102.** The leakage of hydrogen and oxygen significantly affects the electrochemical reactions of the fuel cell. This disadvantageous phenomenon will be extremely obvious after a considerable duration of using the gaskets **106**, **107**. Integral formation of those gaskets **106**, **107** into a single gasket may improve the situation, but it cannot thoroughly solve the problem.

(2) Due to the property of the materials employed for the gaskets **106**, **107** and the different aging rates of the gaskets, the compression pressure at the region of the gaskets is uneven, and hence the compression pressure in the whole fuel cell becomes uneven. This is why the reaction gases often fail to diffuse uniformly, which is a severe block to the conductivity of a PEMFC. Furthermore, because the whole PEMFC relies on the tie rods **110** disposed circumferentially to control its compression pressure, the pressure of the circumferential portion is significantly different from that of the central portion, which will adversely affect the operational effects of the fuel cell.

(3) Utilizing a gasket between the plates fails to efficiently isolate pollution and fails to properly locate each layer in position. Further, because it is difficult to control in advance the compression pressure at an optimal range, it is not possible to pre-prepare a stock of the single cells in the modulized form to proceed with any of the possible types of tests for the purposes of cost reduction and mass production. This is really the key factor of the failure to widely and effectively apply PEMFCs in the industry nowadays.

US Publication No. 2002/0031698 A1 discloses a fuel cell having sealant for sealing a solid polymer electrolyte membrane. The membrane electrode assembly comprises a solid polymer electrolyte membrane, an anode side diffusion electrode (an anode electrode, and a second diffusion layer) disposed at one side of the solid polymer electrolyte membrane, and a cathode side diffusion electrode (a cathode electrode, and a first diffusion layer) disposed at the other side of the solid polymer electrolyte membrane. A pair of separators holds the membrane electrode assembly. A projecting portion extends from the solid polymer electrolyte membrane and projects from the peripheries of the anode side diffusion electrode and the cathode side diffusion electrode. A seal is provided on the separators, which was liquid sealant at the time of application. The seal makes contact with the projecting portion while the membrane electrode assembly is disposed between the separators.

Accordingly, to provide a highly efficient, mass-producible and cost-saving modulized single cell and cell module to solve the above-mentioned problems and further supply breakthrough ideas in manufacturing the PEMFC is a common desire of people skilled in this field.

### SUMMARY OF THE INVENTION

The primary objective of this invention is to provide a single cell of a fuel cell, particularly a single cell of a PEMFC or a module thereof assembled by the single cells, by means of modulizing and unitizing the cell and module, to simplify the manufacturing process of a PEMFC. Because it is possible to test the performance of each single cell or module in advance according to this invention, the quality of the whole fuel cell is significantly improved and the manufacturing cost thereof is reduced to a mass production scale, thereby practically replacing the existing energy.

Another objective of this invention is to provide a sealing structure for a fuel cell assembled by a plurality of modulized single cells or modules. By means of dispensing a desired amount of silicone rubber between the circumferential portions of the anode plate and cathode plate, the two plates and the MEA sandwiched therebetween can be well positioned in a cushioned manner and can be controlled under a predetermined compression pressure in advance before the silicone rubber is cured, thereby ensuring that a high quality single cell and module is obtained.

Yet a further object of this invention is to provide a single cell of a fuel cell or a module comprising the single cells with excellent gastight effect. By means of dispensing silicone rubber between plates, the leakage of the gases and liquid guided through the channels on the plates can therefore be avoided.

To achieve the above objects, in accordance with the present invention, there is provided a seal structure according to claim 4, for sealing a proton exchange membrane fuel cell. The fuel cell includes a membrane electrode assembly, an anode plate, and a cathode plate. Both of the plates are formed with a peripheral groove and an extended groove at a circumferential portion thereof, and silicone rubber is applied to the peripheral groove and the extended groove. Before the silicone rubber is cured, the anode plate, the membrane electrode assembly and the cathode plate are stacked and compressed with a predetermined compression pressure, such that the silicone rubber at the peripheral groove of the anode plate binds correspondingly to the silicone rubber at the peripheral groove of the cathode plate to form a tight seal at the circumferential portions between the anode plate and the cathode plate, and the membrane electrode assembly is tightly sandwiched between the silicone rubber at the extended groove of the anode plate and the silicone rubber at the extended groove of the cathode plate to form a tight seal around the ports between the anode plate and cathode plate.

The detailed technology and preferred embodiments implemented for the subject invention are described in the following paragraphs accompanying the appended drawings for people skilled in this field to well appreciate the features of the claimed invention.

### BRIEF DESCRIPTION OF THE DRAWINGS

**Fig. 1** is a schematic view showing a cross-section of the single cell of a prior art fuel cell;
**Fig. 2** is a perspective view of an assembled prior art fuel cell stack;
**Fig. 3** is a schematic view showing a cross-section of a modulized single cell of a fuel cell according to the present invention;
**Fig. 4** is an exploded view showing the components of the single cell of **Fig. 3**;
**Figs. 5A** to **5D** are cross-sectional views showing the assembly of the single cell according to a first embodiment of the present invention;
**Figs. 6A** to **6B** are cross-sectional views showing the stacking of two single cells of **Fig. 5D** to form a fuel cell module in accordance with a second embodiment of the present invention;
**Figs. 7A** to **7D** are cross-sectional views showing the assembly of the cell module according to a third embodiment of the present invention; and
**Figs. 8A** to **8B** are cross-sectional views showing the stacking of two cell modules of **Fig. 7D** to form a fuel cell stack in accordance with a fourth embodiment of the present invention.

### DETAILED DESCRIPTION OF THE PREFERRED EMBODIMENTS

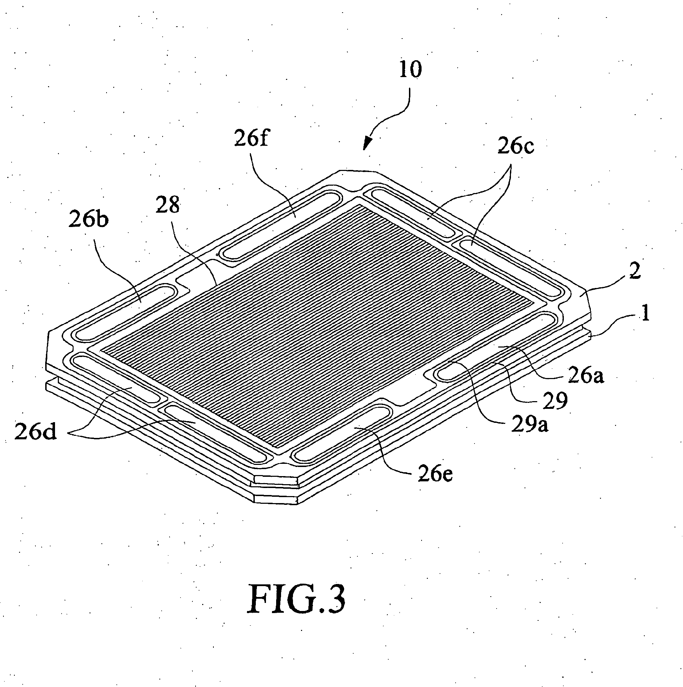

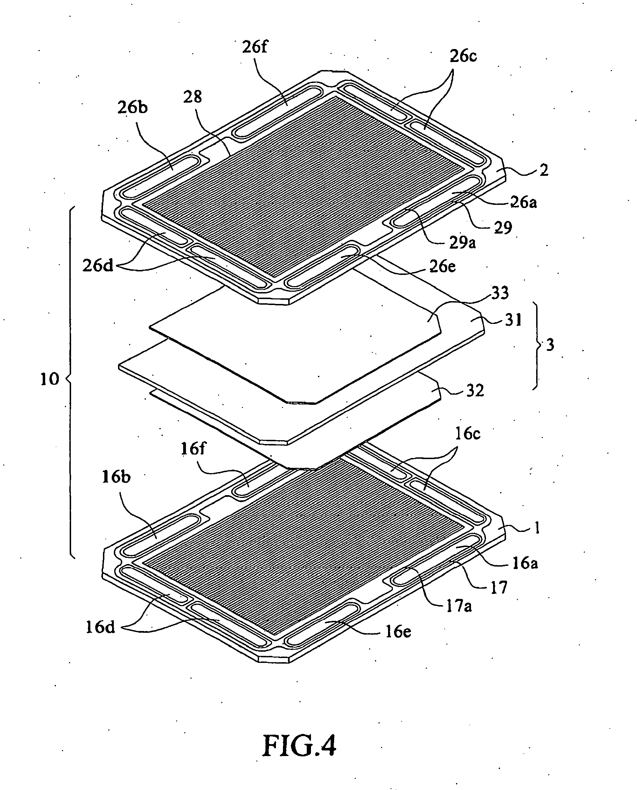

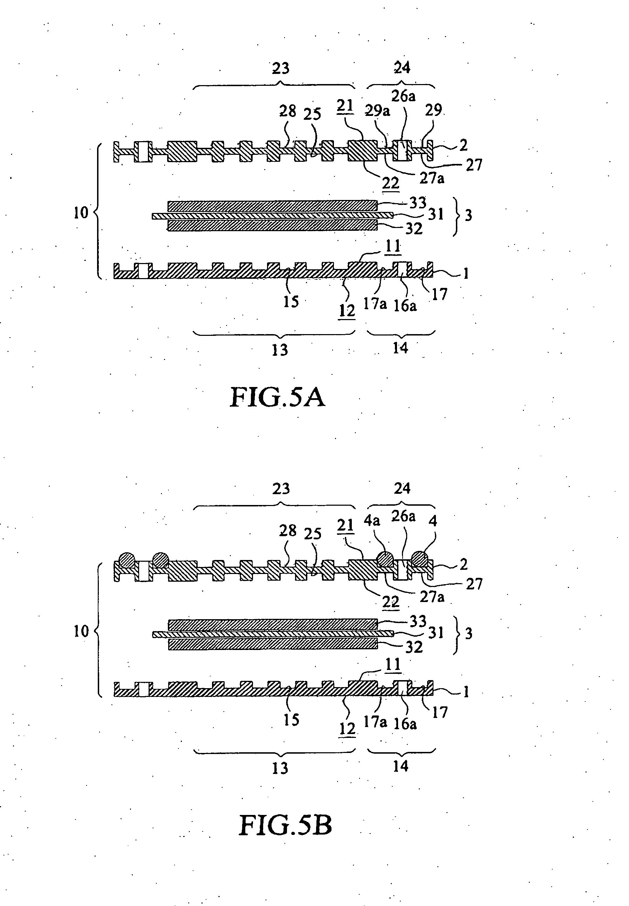

Please refer to the drawings and in particular to **Fig. 3**. **Fig. 3** shows a modulized single cell **10** of a Proton Exchange Membrane Fuel Cell (PEMFC) according to the present invention. **Fig. 4** is an exploded view showing the components of the modulized single cell **10** and **Fig. 5A** is a cross-sectional view of the components.

Of course, the technical concept is not restricted to a PEMFC. The modulization technology of the subject invention is applicable to any type of fuel cell having similar construction.

The modulized single cell **10** includes an anode plate **1** and a cathode plate **2**, serving as separator plates for the fuel cell. The anode plate **1** has a first surface **11**, a second surface **12**, a central portion **13** and a circumferential portion **14**. The central portion **13** on the first surface **11** is formed with a plurality of anode gas channels **15** having predetermined layout for hydrogen flowing therethrough. The circumferential portion **14** of the anode plate **1** is formed with a hydrogen inlet port **16a**, a hydrogen outlet port **16b**, an air inlet port **16c**, an air outlet port **16d**, a coolant inlet port **16e** and a coolant outlet port **16f**. In the embodiment, the second surface **12** of the anode plate **1** is generally flat in structure.

Similarly, the cathode plate **2** has a first surface **21**, a second surface **22**, a central portion **23** and a circumferential portion **24**. The central portion **23** on the second surface **22** is formed with a plurality of cathode gas channels **25** having predetermined layout for air flowing therethrough. The circumferential portion **24** of the cathode plate **2** is formed with a hydrogen inlet port **26a**, a hydrogen outlet port **26b**, an air inlet port **26c**, an air outlet port **26d**, a coolant inlet port **26e**, and a coolant outlet port **26f**.

When the cathode plate **2** is superimposed on the anode plate **1,** the hydrogen inlet port **26a,** the hydrogen outlet port **26b,** the air inlet port **26c,** the air outlet port **26d,** the coolant inlet port **26e,** and the coolant outlet port **26f** at the circumferential portion **24** of the cathode plate **2** are located oppositely and communicated respectively with the hydrogen inlet port **16a,** the hydrogen outlet port **16b,** the air inlet port **16c,** the air outlet port **16d,** the coolant inlet port **16e** and the coolant outlet port **16f** at the circumferential portion **14** of the anode plate **1,** forming passages for flowing of hydrogen, air, and coolant respectively.

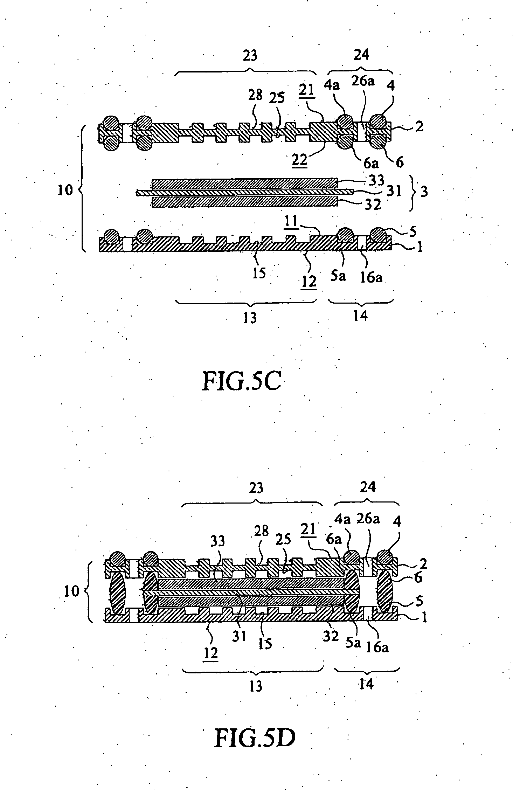

A membrane electrode assembly (MEA) **3** is mounted between the anode plate **1** and cathode plate **2.** The MEA **3** has an anode gas diffusion layer (GDL) **32,** a proton exchange membrane (PEM) **31** and a cathode gas diffusion layer (GDL) **33,** that are sequentially stacked and located between the central portion **13** of the anode plate **1** and the central portion **23** of the cathode plate **2.** As illustrated in **Figs. 5C****,** the proton exchange membrane **31** has a periphery part offset from the anode gas diffusion layer **32** and the cathode gas diffusion layer **33.** An anode catalytic layer (not shown) is coated between the anode GDL **32** and the PEM **31,** and a cathode catalytic layer (not shown) is coated between the PEM **31** and the cathode GDL **33,** such that the hydrogen introduced through the channels **15** of the anode plate **1** and the oxygen introduced through the channels **25** of the cathode plate **2** are adapted to proceed with the reverse reaction of the electrolytic dissociation of water.

The first surface **11** of the circumferential portion **14** of the anode plate **1** is formed with a peripheral groove **17.** Also, an extended groove **17a** is formed in the vicinity of the ports **16a, 16b, 16c, 16d, 16e, 16f** and communicated with the peripheral groove **17.**

Similarly, the second surface **22** of the circumferential portion **24** of the cathode plate **2** facing the anode plate **1** is formed with a peripheral groove **27**. An extended groove **27a** is formed in the vicinity the ports **26a, 26b, 26c, 26d, 26e, 26f** and communicated with the peripheral groove **27**.

In this embodiment, the first surface **21** of the central portion **23** of the cathode plate **2** is also formed with a plurality of coolant channels **28** having predetermined layout for coolant flowing therethrough. The first surface **21** at the circumferential portion **24** of the cathode plate **2** is formed with a peripheral groove **29.** An extended groove **29a** is formed in the vicinity of the ports **26a, 26b, 26c, 26d, 26e, 26f** and communicated with the peripheral groove **29.**

In the assembly of the single cell **10,** appropriate amounts of silicone rubbers **4, 4a** are applied to the peripheral groove **29** and the extended groove **29a** at the first surface 21 of the cathode plate **2** and cured, as shown in **Fig. 5****B.**

Then, appropriate amounts of silicone rubbers **5, 5a** are applied to the peripheral groove **17** and the extended groove **17a** at the first surface **11** of the circumferential portion **14** of the anode plate **1**. As shown in **Fig. 5C****,** appropriate amounts of silicone rubbers **6, 6a** are also applied to the peripheral groove **27** and extended groove **27a** at the second surface **22** of the circumferential portion **24** of the cathode plate 2. It is shown in **Fig. 5D** that after the application of the silicone rubbers **5, 5a, 6, 6a** and before the silicone rubbers **5, 5a, 6, 6a** are cured, the membrane electrode assembly **3** is sandwiched precisely between the central portion **13** of the anode plate **1** and the central portion **23** of the cathode plate **2** and the structure is compressed with a predetermined compression pressure. Accordingly, the silicone rubber **5** at the peripheral groove **17** of the anode plate **1** binds to the silicone rubber **6** at the peripheral groove **27** of the cathode plate **2,** forming a tight seal at the circumferential portion **14** between the anode plate **1** and cathode plate **2.**

Moreover, the periphery part of the PEM **31** of the MEA **3** is adhered by the silicone rubber **5a** at the extended groove **17a** of the anode plate **1** and the silicone rubber **6a** at the extended groove 27a of the cathode plate 2 after the silicone rubbers are cured and therefore the periphery part of the PEM **31** is substantially covered by the silicone rubbers (5a, 6a). Thereby, the PEM 31 is stably located in position between the anode plate 1 and the cathode plate 2, and tight seal are formed around the ports between the anode plate **1** and cathode plate **2** after the silicone rubbers are cured. Thereby, each of the ports **16a, 16b, 16c, 16d, 16e, 16f at** the anode plate **1** is only in communication respectively with the corresponding ports **26a, 26b, 26c, 26d, 26e, 26f** at the cathode plate **2**. Accordingly, a modulized unitary single cell **10** is formed.

By means of the described technology, the single cell 10 is tightly sealed at the circumferential portion. Moreover, the anode plate, MEA and cathode plate are stably positioned and fastened to each other. Seal is provided between the ports of the anode plate and cathode plate, forming a plurality of separate passages. Thereby, hydrogen gas, oxygen gas and coolant are separately transported and sealed from leakage.

In the embodiment, silicone rubber is used as the adhesive material for binding the separator plates of the single cell **10**. Preferably, the silicone rubber is selected from material which has non-corrosive electronic grade and can be cured under moisture or heat.

According to experimental and practical experiences, in the event that the silicone rubber made of heat-cured material is utilized for the manufacture of the single cell, the silicone rubber generally has a heat-cured temperature of 100-140°C. Because the curing temperature of the silicone rubber is higher than the working temperature (lower than 100°C) of PEMFC, the silicone rubber is stable and can perform an optimal after-cured effect thereof. Preferably, to provide an optimal seal and positioning effect, the viscosity of the silicone rubber utilized is greater than 150,000 centi-poise. Furthermore, the silicone rubber having a dielectric strength ranging from 15-20 V/mil would sufficiently perform a considerable electricity resistance. Nevertheless, the above-mentioned values are proposed for people skilled in this field to implement the present invention under a preferred situation. It dos not mean that any values going beyond the proposed ranges cannot perform well the expected functions as set forth therein.

In practical application, one can assemble a plurality of single cells as mentioned above and superimpose them onto one another to form a cell module for performing high power output.

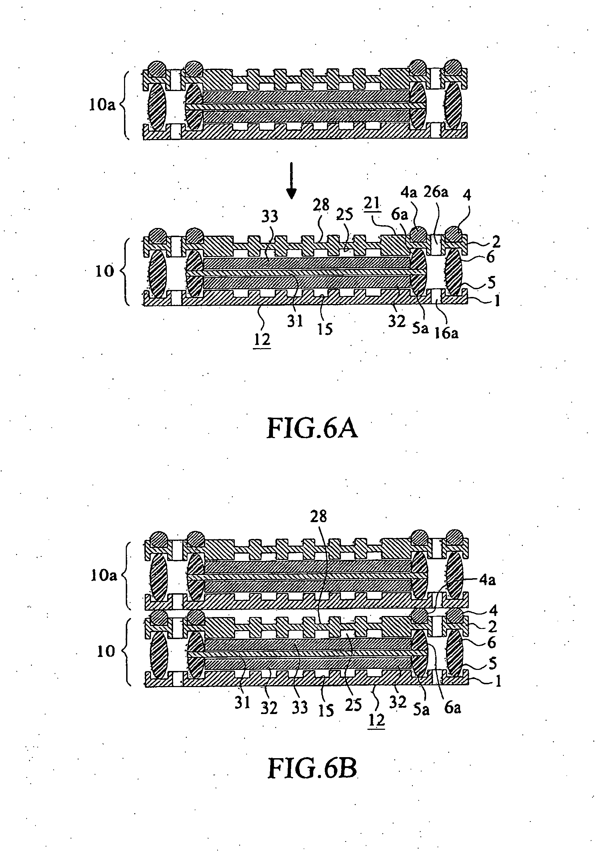

**Fig. 6a** shows a cross-sectional view of a second embodiment of the present invention, in which two single cells are superimposed to form a fuel cell module. Two modulized single cells **10, 10a** are formed in accordance with the technology as mentioned. Please refer to **Fig. 6B**. The single cells **10, 10a** are then stacked together, such that the anode plate 1 at the bottom of the second single cell **10a** is superimposed on the top of the cathode plate **2** of the first single cell **10**. Accordingly, the plane structure of the second surface of the anode plate of the second single cell **10a** forms the top surface of the coolant channels on the first surface **21** of the cathode plate **2,** providing a passage for coolant flowing therethrough. By means of the silicone rubbers **4, 4a** which are previously applied at the first surface **21** of the cathode plate **2** of the first single cell **10** and by compressing the two modulized single cells **10, 10a** with a predetermined compression pressure, the two single cells **10, 10a** are stably bound together and the coolant channels **28** are tightly sealed.

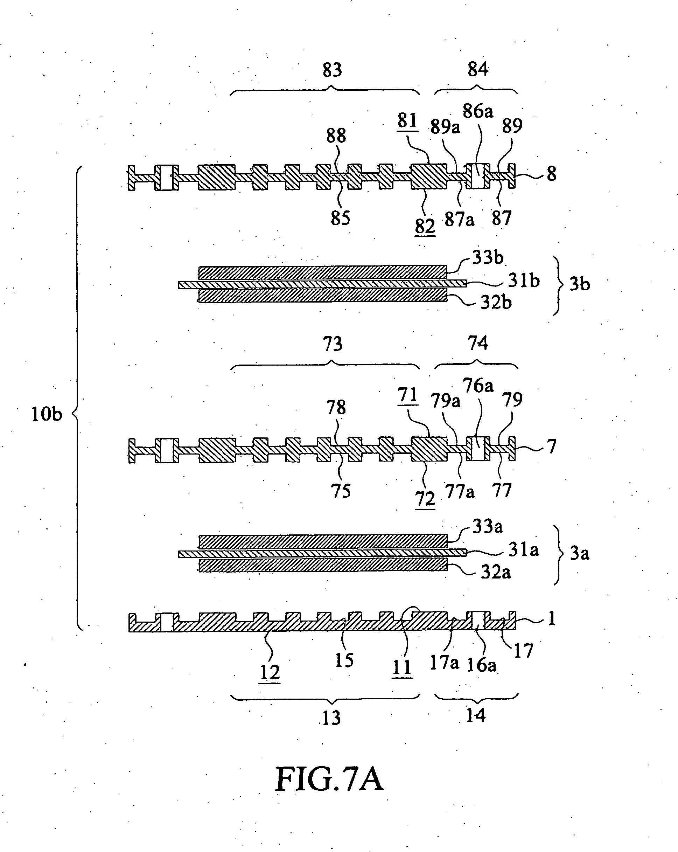

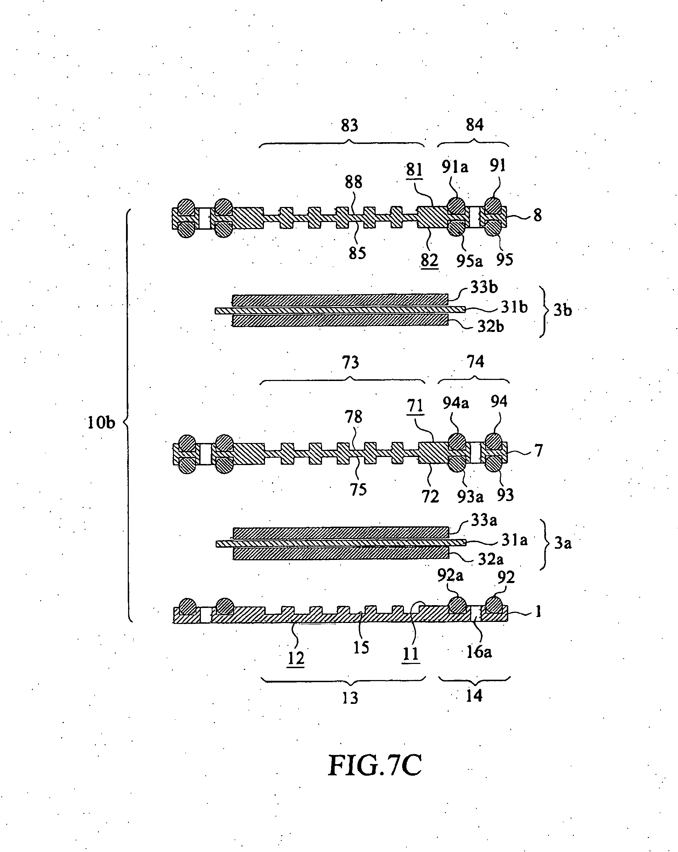

**Fig. 7A** is a cross-sectional view showing the cell module constructed in accordance with a third embodiment of the present invention. In the example shown, the cell module comprises two MEAs, one bipolar plate, an anode plate and a cathode plate. Similar reference numerals are used to identify elements that are similar or identical as that in **Figs. 5A** to **5D****.**

In this embodiment, the cell module **10b** comprises an anode plate **1,** a bipolar plate **7** and a first MEA **3a.** The anode plate **1** has a first surface **11,** a second surface **12,** a central portion **13,** a circumferential portion **14,** a plurality of anode gas channels **15,** a peripheral groove **17,** an extended groove **17a,** and a plurality of ports. The bipolar plate **7** comprises a first surface **71,** a second surface **72,** a central portion **73,** a peripheral portion **74,** a plurality of cathode gas channels **75,** a peripheral groove **77,** an extended groove **77a,** a peripheral groove **79,** an extended groove **79a,** and a plurality of ports 76a. Furthermore, the first surface **71** of the central portion **73** is formed with a plurality of anode gas channels **78** for anode gas flowing therethrough. The first MEA **3a** comprises a proton exchange membrane **31a,** an anode gas diffusion layer **32a** and a cathode gas diffusion layer **33a.**

A second MEA **3b** is stacked on the first surface **71** of the bipolar plate 7. The second MEA **3b** comprises a proton exchange membrane **31b,** an anode gas diffusion layer **32b** and a cathode gas diffusion layer **33b,** in which the anode gas diffusion layer **32b** of the second MEA **3b** is superimposed on the central portion **73** at the first surface **71** of the bipolar plate **7**. A cathode plate **8** is then stacked on the top of the cathode gas diffusion layer **33b** of the second MEA **3b.**

The cathode plate **8** includes a first surface **81**, a second surface **82,** a central portion **83,** a circumferential portion **84,** a plurality of cathode gas channels **85,** a peripheral groove **87** and an extended groove **87a** formed at the second surface **82,** a peripheral groove **89** and an extended groove **89a** formed at the first surface **81** and a plurality of ports 86a. Also, a plurality of coolant channels **88** are formed at the first surface **81** of the central portion **83** of the cathode plate **8** for coolant flowing therethrough.

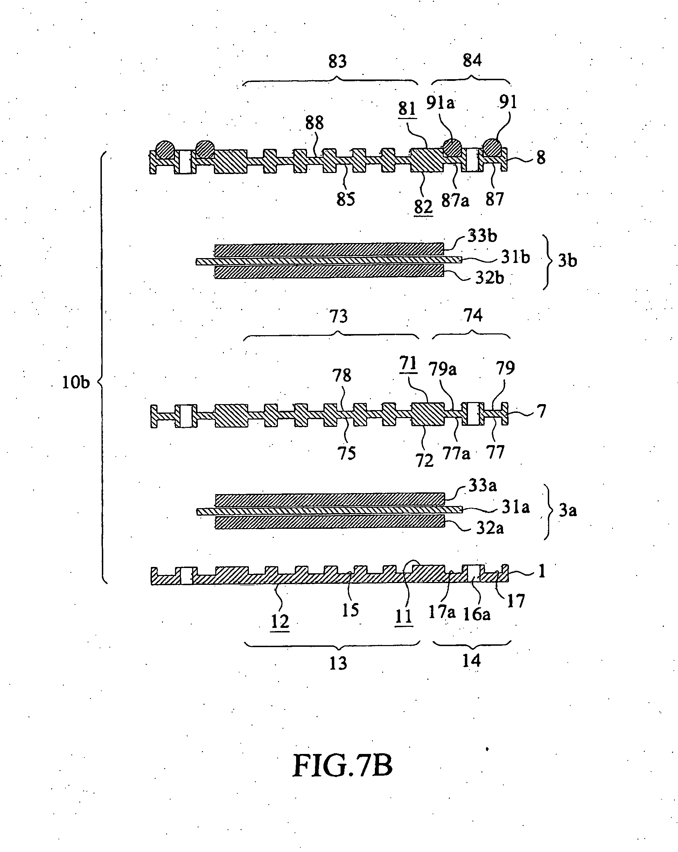

In the manufacture of the cell module **10b,** the peripheral groove **89** and extended groove **89a** at the first surface **81** of the circumferential portion **84** are dispensed with silicone rubbers **91, 91a,** as shown in **Fig. 7B**. The silicone rubbers **91, 91a** are cured.

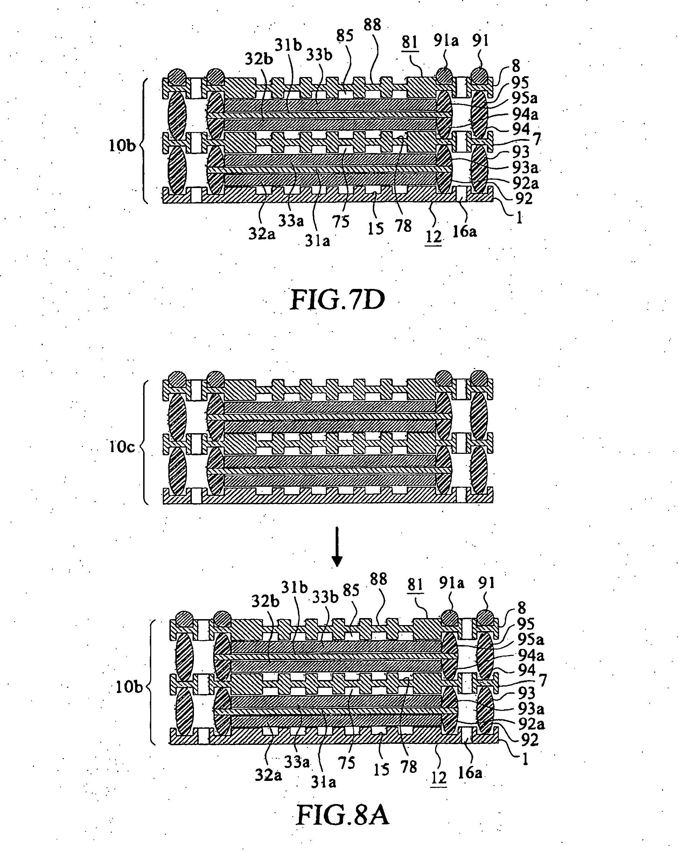

Then, the peripheral groove **17** and extended groove **17a** of the anode plate **1** are applied with silicone rubbers **92, 92a.** Similarly, the peripheral grooves **77, 79** and extended grooves **77a; 79a** of the bipolar plate 7 and the peripheral groove **87** and extended groove **87a** of the cathode plate **8** are respectively applied with silicone rubbers **93, 94, 93a, 94a, 95, 95a**. Before the silicone rubbers are cured, the anode plate **1,** first MEA **3a,** bipolar plate **7,** second MEA **3b**, and cathode plate **8** are precisely stacked in proper order and compressed with a predetermined compression pressure, as shown in **Fig. 7D****.** The silicone rubbers **92, 93, 94, 95** on each plate stick to the corresponding silicone rubbers at the opposing surface and is cured to form a tight seal. The seal tightly seal the circumferential portions among the anode plate **1,** bipolar plate **7** and cathode plate **8.** Besides, the silicone rubbers **92a, 93a** correspondingly stick to the proton exchange membrane **31a** of the first MEA **3a** and the silicone rubbers **94a, 95a** correspondingly stick to the proton exchange membrane **31b** of the second MEA **3b,** such that the first and second MEA **3a, 3b** are stably anchored in position and sealings are formed around the ports between adjacent plates. Hence, an integrated modularized cell module **10b** is formed.

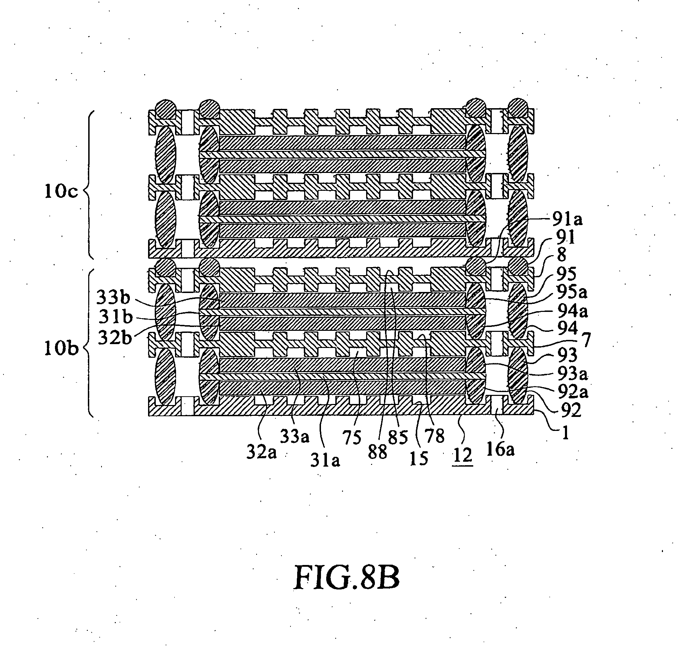

**Figs. 8A** to **8B** are cross-sectional views showing the stacking of two cell modules of **Fig. 7D** to form a fuel cell stack in accordance with a fourth embodiment of the present invention. In assembly, two cell modules **10b, 10c** manufactured by the technology are stacked together in series, such that the second surface of the anode plate of the cell module **10c** is superimposed on the first surface of the cathode plate of cell module **10b,** as shown in **Fig. 8b**. Accordingly, the flat structure of the second surface of the anode plate of cell module **10c** forms the top surface of the coolant channels on the first surface of the cathode plate **8**. By means of the silicone rubbers **91, 91a** applied at the first surface of the cathode plate **8** of the cell module **10b,** and by compressing the two cell modules **10b, 10c** with a predetermined compression pressure, the two cell modules are bound together, forming a tight structure. Hence, the coolant channels are tightly sealed for flowing of coolant therethrough.

The above disclosure is related to the detailed technical contents and inventive features thereof. People skilled in this field may proceed with a variety of modifications and replacements based on the disclosures and suggestions of the invention as described without departing from the characteristics thereof. Nevertheless, although such modifications and replacements are not fully disclosed in the above descriptions, they have substantially been covered in the following claims as appended.

## Claims

1. A method for sealing a fuel cell (10), comprising:
a membrane electrode assembly (3), including an anode side with an anode gas diffusion layer (32), a cathode side with a cathode gas diffusion layer (33), and a proton exchange membrane (31) mounted between the anode gas diffusion layer (32) and the cathode gas diffusion layer (33); the proton exchange membrane (31) having a periphery part offset from the anode gas diffusion layer (32) and the cathode gas diffusion layer (33);
an anode plate (1) serving as separator plate or end plate mounted to the anode gas diffusion layer (32) of the membrane electrode assembly (3), which comprises a first surface (11) facing to the anode gas diffusion layer (32) of the membrane electrode assembly (3), a second surface (12), a central portion (13), a circumferential portion (14) and a plurality of ports (16a∼16f) formed at the circumferential portion (14), in which the first surface (11) is formed with a plurality of anode gas channels (15) at the central portion (13), a peripheral groove (17) at the circumferential portion (14) and an extended groove (17a) around the ports (16a∼16f); and
a cathode plate (2) serving as separator plate or end plate mounted to the cathode gas diffusion layer (33) of the membrane electrode assembly (3), which comprises a first surface (21), a second surface (22) facing to the cathode gas diffusion layer (33) of the membrane electrode assembly (3), a central portion (23), a circumferential portion (24) and a plurality of ports (26a∼26f) formed at the circumferential portion (24), in which the second surface (22) is formed with a plurality of cathode gas channels (25) at the central portion (23), a peripheral groove (27) at the circumferential portion (24) and an extended groove (27a) around the ports (26a∼26f);
**characterized in that** in assembly of the fuel cell (10), a silicon rubber (5, 5a, 6, 6a) is respectively applied to the peripheral groove (17) and the extended groove (17a) at the first surface (11) of the anode plate (1) and the peripheral groove (27) and the extended groove (27a) at the second surface (22) of the cathode plate (2), and before the silicon rubbers (5, 5a, 6, 6a) are cured, the anode plate (1), the membrane electrode assembly (3) and the cathode plate (2) are stacked and compressed with a predetermined compression pressure, such that the silicon rubber (5) at the peripheral groove (17) of the anode plate (1) binds correspondingly to the silicon rubber (6) at the peripheral groove (27) of the cathode plate (2), and wherein the periphery part of the proton exchange membrane (31) of the membrane electrode assembly (3) is sandwiched and adhered by the silicon rubber (5a) at the extended groove (17a) of the anode plate (1) and the silicon rubber (6a) at the extended groove (27a) of the cathode plate (2), and wherein tight seals are formed around the ports (16a∼16f, 26a-26f) between the anode plate (1) and cathode plate (2) by curing the silicon rubbers (5, 5a, 6, 6a), wherein the peripheral groove (17, 27) and the extended groove (17a, 27a) of any of the anode or cathode plate (1, 2) are in communication.

2. A fuel cell with a sealing structure obtainable by the method of Claim 1, wherein the first surface (21) of the cathode plate (2) is further formed with a plurality of coolant channels (28) thereon.

3. A fuel cell with a sealing structure obtainable by the method of Claim 1 or 2, wherein the second surface (12) of the anode plate (1) has a flat structure.

4. A sealing structure for sealing a fuel cell (10) module including a plurality of stacked single fuel cells (10), obtainable by the method of Claim 1.

5. A fuel cell with a sealing structure obtainable by the method of Claim 1, further comprising a bipolar plate (7), sandwiched between membrane electrode assemblies (3a, 3b).

## Patentansprüche

1. Verfahren zum Abdichten einer Brennstoffzelle (10) umfassend:
eine Membranelektrodenanordnung (3) mit einer Anodenseite mit einer Anodengasdiffusionsschicht (32), einer Kathodenseite mit einer Kathodengasdiffusionsschicht (33) und einer Protonenaustauschmembran (31), angebracht zwischen der Anodengasdiffusionsschicht (32) und der Kathodengasdiffusionsschicht (33); die Protonenaustauschmembran (31) weist einen umlaufenden Abschnitt auf, der zu der Anodengasdiffusionsschicht (32) und der Kathodengasdiffusionsschicht (33) versetzt ist;
eine Anodenplatte (1), die als Separatorplatte oder Endplatte dient und an der Anodengasdiffusionsschicht (32) der Membranelektrodenanordnung (3) angebracht ist, welche eine erste Oberfläche (11) gegenüber der Anodengasdiffusionsschicht (32) der Membranelektrodenanordnung (3), eine zweite Oberfläche (12), einen zentralen Bereich (13), einen umlaufenden Bereich (14) und eine Vielzahl von Anschlüssen (16a ∼ 16f), die in dem umlaufenden Bereich (14) ausgebildet sind, in dem die erste Oberfläche (11) mit einer Vielzahl von Anodengaskanälen (15) in dem zentralen Bereich (13) ausgeformt ist, eine umlaufende Vertiefung (17) in dem umlaufenden Bereich (14) und eine erweiterte Vertiefung (17a) um die Anschlüsse (16a ∼ 16f) umfasst; und
eine Kathodenplatte (2), die als Separatorplatte oder Endplatte dient und an der Kathodengasdiffusionsschicht (33) der Membranelektrodenanordnung (3) angebracht ist, welche eine erste Oberfläche (21), eine zweite Oberfläche (22) gegenüber der Kathodengasdiffusionsschicht (33) der Membranelektrodenanordnung (3), einen zentralen Bereich (23), einen umlaufenden Bereich (24) und eine Vielzahl von Anschlüssen (26a ∼ 26f), die in den umlaufenden Bereich (24) ausgebildet sind, in dem die zweite Oberfläche (22) mit einer Vielzahl von Kathodengaskanälen (25) in dem zentralen Bereich (23) ausgeformt ist, eine umlaufende Vertiefung (27) in dem umlaufenden Bereich (24) und eine erweiterte Vertiefung (27a) um die Anschlüsse (26a ∼ 26f) umfasst;
**dadurch gekennzeichnet, dass** beim Zusammenbau der Brennstoffzelle (10) ein Silikongummi (5, 5a, 6, 6a) auf die umlaufende Vertiefung (17) und die erweiterte Vertiefung (17a) auf der ersten Oberfläche (11) der Anodenplatte (1) und die umlaufende Vertiefung (27) und die erweiterte Vertiefung (27a) auf der zweiten Oberfläche (22) der Kathodenplatte (2) angeordnet wird und, bevor die Silikongummi (5, 5a, 6, 6a) ausgehärtet werden, die Anodenplatte (1), die Membranelektrodenanordnung (3) und die Kathodenplatte (2) gestapelt und mit einem vorbestimmten Zusammenpressdruck zusammengepresst werden, so dass der Silikongummi (5) in der umlaufenden Vertiefung (17) der Anodenplatte (1) sich mit dem Silikongummi (6) der umlaufenden Vertiefung (27) der Kathodenplatte (2) verbindet, und wobei der umlaufende Abschnitt der Protonenaustauschmembran (31) der Membranelektrodenanordnung (3) durch den Silikongummi (5a) an der erweiterten Vertiefung (17a) der Anodenplatte (1) und dem Silikongummi (6a) an der erweiterten Vertiefung (27a) der Kathodenplatte (2) eingefasst und verklebt wird, und wobei eng anliegende Dichtungen um die Anschlüsse (16au 16f, 26a ~ 26f) zwischen der Anodenplatte (1) und der Kathodenplatte (2) durch Aushärten der Silikongummis (5, 5a, 6, 6a) gebildet werden, wobei die umlaufende Vertiefung (17, 27) und die erweiterte Vertiefung (17a, 27a) sowohl der Anoden- als auch der Kathodenplatte (1, 2) in Verbindung stehen.

2. Brennstoffzelle mit einer Dichtungsstruktur gemäß dem Verfahren nach Anspruch 1, wobei die erste Oberflache (21) der Kathodenplatte (2) ferner mit einer Vielzahl von Kühlkanälen (28) ausgestattet ist.

3. Brennstoffzelle mit einer Dichtungsstruktur gemäß dem Verfahren nach Anspruch 1 oder 2, wobei die zweite Oberfläche (12) der Anodenplatte (1) eine flache Struktur aufweist.

4. Dichtungsstruktur zum Abdichten eines Moduls von Brennstoffzellen (10) mit einer Vielzahl von gestapelten einzelnen Brennstoffzellen (10) gemäß dem Verfahren nach Anspruch 1.

5. Brennstoffzelle mit einer Dichtungsstruktur erhältlich durch das Verfahren nach Anspruch 1, ferner umfassend eine bipolare Platte (7) eingebracht zwischen Membranelektrodenanordnungen (3a, 3b).

## Revendications

1. Procédé employé pour rendre étanche une pile à combustible (10), comportant l'utilisation des éléments suivants:
un ensemble d'électrodes à membrane (3), comprenant un côté anodique ayant une couche anodique à diffusion gazeuse (32), un côté cathodique ayant une couche cathodique à diffusion gazeuse (33), et une membrane d'échange protonique (31) montée entre la couche anodique à diffusion gazeuse (32) et la couche cathodique à diffusion gazeuse (33); la membrane d'échange protonique (31) ayant une partie périphérique décalée par rapport à la couche anodique à diffusion gazeuse (32) et la couche cathodique à diffusion gazeuse (33);
une plaque anodique (1) servant de plaque de séparation ou de plaque d'extrémité montée sur la couche anodique à diffusion gazeuse (32) de l'ensemble d'électrodes à membrane (3), qui comprend une première surface (11) tournée vers la couche anodique à diffusion gazeuse (32) de l'ensemble d'électrodes à membrane (3), une deuxième surface (12), une partie centrale (13), une partie circonférentielle (14) et une pluralité d'orifices (16a ∼ 16f) formés dans la partie circonférentielle (14) où la première surface (11) est formée avec une pluralité de rainures à gaz anodiques (15) dans la partie centrale (13), une rainure périphérique (17) dans la partie circonférentielle (14) et une rainure allongée (17a) autour des orifices (16a ∼ 16f); et
une plaque cathodique (2) servant de plaque de séparation ou de plaque d'extrémité montée sur la couche cathodique à diffusion gazeuse (33) de l'ensemble d'électrodes à membrane (3), qui comprend une première surface (21), une deuxième surface (22) tournée vers la couche cathodique à diffusion gazeuse (33) de l'ensemble d'électrodes à membrane (3), une partie centrale (23), une partie circonférentielle (24) et une pluralité d'orifices (26a - 26f) formés dans la partie circonférentielle (24), où la deuxième surface (22) est formée avec une pluralité de rainures à gaz cathodiques (25) dans la partie centrale (23), une rainure périphérique (27) dans la partie circonférentielle (24) et une rainure allongée (27a) autour des orifices (26a - 26f);
**caractérisé en ce que**, pendant l'assemblage de la pile à combustible (10), des garnitures en caoutchouc au silicium (5, 5a, 6, 6a) sont utilisées respectivement dans la rainure périphérique (17) et la rainure allongée (17a) au niveau de la première surface (11) de la plaque anodique (1), et aussi dans la rainure périphérique (27) et la rainure allongée (27a) au niveau de la deuxième surface (22) de la plaque cathodique (2), et avant que les garnitures en caoutchouc au silicium (5, 5a, 6, 6a) se durcissent, la plaque anodique (1), l'ensemble d'électrodes à membrane (3) et la plaque cathodique (2) sont empilés et comprimés avec une force de compression prédéterminée, de telle manière que la garniture en caoutchouc au silicium (5) disposée dans la rainure périphérique (17) de la plaque anodique (1) adhère de manière correspondante sur la garniture en caoutchouc au silicium (6) dans la rainure périphérique (27) de la plaque cathodique (2), **caractérisé en ce que** la partie périphérique de la membrane d'échange protonique (31) de l'ensemble d'électrodes à membrane (3) est prise en sandwich et collée par la garniture en caoutchouc au silicium (5a) dans la rainure allongée (17a) de la plaque anodique (1) et la garniture en caoutchouc au silicium (6a) dans la rainure (27a) de la plaque cathodique (2), **caractérisé en ce que** des joints d'étanchéité sont constitués autour des orifices (16a∼16f, 26a-26f) entre la plaque anodique (1) et la plaque cathodique (2) par le durcissement des garnitures en caoutchouc au silicium (5, 5a, 6, 6a), et **caractérisé en ce que** la rainure périphérique (17, 27) et la rainure allongée (17a, 27a) de la plaque anodique ou de la plaque cathodique (1, 2) communiquent l'une avec l'autre.

2. Pile à combustible à structure d'étanchéité réalisée selon le procédé décrit dans la revendication 1, **caractérisée en ce que** la première surface (21) de la plaque cathodique (2) est formée par ailleurs avec une pluralité de rainures à réfrigérant (28) disposés au-dessus.

3. Pile à combustible à structure d'étanchéité réalisée selon le procédé décrit dans la revendication 1 ou 2, **caractérisée en ce que** la structure de la deuxième surface (12) de la plaque anodique (1) est plate.

4. Structure d'étanchéité pour rendre étanche un module de pile à combustible (10) comprenant une pluralité de piles à combustible simples empilées (10) les unes sur les autres, cette étanchéité étant réalisé selon le procédé décrit dans la revendication 1.

5. Pile à combustible à structure d'étanchéité réalisée selon le procédé décrit dans la revendication 1, comportant par ailleurs une plaque bipolaire (7) prise en sandwich entre les ensembles d'électrodes à membrane (3a, 3b).
